(19) Europäisches Patentamt
European Patent Office
Office européen des brevets

(11) **EP 3 677 640 B1**

(12) **EUROPEAN PATENT SPECIFICATION**

(45) Date of publication and mention of the grant of the patent:
**13.12.2023 Bulletin 2023/50**

(21) Application number: **18849649.1**

(22) Date of filing: **27.08.2018**

(51) International Patent Classification (IPC):
*C08L 23/26* *(2006.01)*   *C08L 23/00* *(2006.01)*
*C08L 77/00* *(2006.01)*   *C08L 23/06* *(2006.01)*

(52) Cooperative Patent Classification (CPC):
(C-Sets available)
**C08L 23/06;** C08L 2203/30; C08L 2205/03   (Cont.)

(86) International application number:
**PCT/JP2018/031618**

(87) International publication number:
**WO 2019/044784 (07.03.2019 Gazette 2019/10)**

(54) **RESIN COMPOSITION, MOLDED OBJECT, AND PRODUCTION METHOD FOR RESIN COMPOSITION**

HARZZUSAMMENSETZUNG, FORMKÖRPER UND HERSTELLUNGSVERFAHREN FÜR EINE HARZZUSAMMENSETZUNG

COMPOSITION DE RÉSINE, OBJET MOULÉ ET PROCÉDÉ DE PRODUCTION DE COMPOSITION DE RÉSINE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.08.2017 JP 2017163770**

(43) Date of publication of application:
**08.07.2020 Bulletin 2020/28**

(73) Proprietor: **Dow-Mitsui Polychemicals Co., Ltd. Tokyo 104-0028 (JP)**

(72) Inventors:
• **NAKANO, Shigenori**
  **Ichihara-shi, Chiba 299-0108 (JP)**
• **SAKUMA, Masami**
  **Ichihara-shi, Chiba 299-0108 (JP)**
• **TAKAOKA, Hiroki**
  **Ichihara-shi, Chiba 299-0108 (JP)**

(74) Representative: **Gulde & Partner**
**Patent- und Rechtsanwaltskanzlei mbB**
**Wallstraße 58/59**
**10179 Berlin (DE)**

(56) References cited:
**BE-A- 663 684**       **FR-A- 1 567 487**
**JP-A- H06 287 223**   **JP-A- 2002 146 080**
**JP-A- 2004 018 660**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 677 640 B1

(52) Cooperative Patent Classification (CPC): (Cont.)

C-Sets
**C08L 23/06, C08L 23/0876, C08L 77/00**

## Description

Technical Field

The present disclosure relates to a resin composition, a molded article, and a method of producing a resin composition.

Background Art

Resin compositions containing an ionomer resin of an ethylene-unsaturated carboxylic acid-based copolymer have excellent adhesion with metals and glass, transparency, mechanical strength, flexibility, elongation, resiliency and the like; therefore, they are used in various applications such as films and sheets of industrial materials, toys, stationeries, miscellaneous goods, and the like.

For example, Japanese Patent Application Laid-Open (JP-A) No. S60-127149 discloses that an ionomer resin obtained by neutralization of carboxy groups of an ethylene-(meth)acrylic acid copolymer with a metal ion has superior performance in terms of wear resistance and transparency as compared to other ethylene-based copolymers, which is attributed to ionic crosslinks of the ionomer resin, and it is known to use the ionomer resin for improving the surface scratch resistance with taking advantage of such performance.

Further, an ionomer resin of an ethylene-unsaturated carboxylic acid copolymer is often used in combination with other components in accordance with the intended use and the required physical properties and, as a production method by which an ionomer resin composition having excellent antistatic properties can be produced in an industrially advantageous manner, for example, JP-A No. 2011-42809 discloses a method of producing an ionomer resin composition, the method being characterized by including, in a screw extruder, allowing from 70 to 98 parts by weight of a mixed ethylene-unsaturated carboxylic acid copolymer component, which is composed of from 2 to 55% by weight of an ethylene-unsaturated carboxylic acid copolymer (A-1) having an unsaturated carboxylic acid content of 15% by weight or less and a melting point of 90°C or higher and from 98 to 45% by weight of an ethylene-unsaturated carboxylic acid copolymer (A-2) having an unsaturated carboxylic acid content of more than 15% by weight and a melting point of lower than 90°C and has an average carboxylic acid content of from 13 to 20% by weight and an average melt flow rate (190°C, 2,160-g load) of from 200 to 800 g/10 min, and from 30 to 2 parts by weight of a hydrophobic polymer (B) to react with a potassium compound acting as an ion source while melt-kneading these materials so as to neutralize not less than 80% of the carboxyl groups of the mixed ethylene-unsaturated carboxylic acid copolymer component.

## SUMMARY OF THE INVENTION

Technical Problem

The ionomer resin-containing laminated body disclosed in JP-A No. S60-127149 has excellent scratch resistance; however, further improvements in heat resistance and the like have been desired.

Moreover, although an ionomer composition obtained by the production method disclosed in JP-A No. 2011-42809 has excellent antistatic properties, its scratch resistance and heat resistance were not examined and may be insufficient.

FR 1 567 487 A and BE 663 684 A teach further resin compositions.

The present disclosure was made in view of the above and provides a resin composition having excellent heat resistance and scratch resistance, a molded article, and a method of producing a resin composition.

Solution to Problem

An aspect of the present invention includes the following embodiments.

<1> A resin composition comprising:

an ionomer resin of from 25% by mass to 64% by mass of an ethylene-unsaturated carboxylic acid-based copolymer (A); and
from 36% by mass to 75% by mass of an olefin polymer (B),
the ionomer resin being neutralized with a metal ion and having a degree of neutralization of 52% or higher, with the proviso that a total amount of resin components in the resin composition that would be present when the resin composition is unneutralized being defined as 100% by mass;
wherein a final blend neutralization rate ($A \times B \times C \times 10^{-4}$); with the final blend neutralization rate being defined as a product of:

> a content of the structural unit formed from an unsaturated carboxylic acid in the ethylene-unsaturated carboxylic acid-based copolymer (A) (A% by mass);
> the degree of neutralization of the ionomer resin (B%); and
> a content of the ethylene-unsaturated carboxylic acid-based copolymer (A) (C% by mass); and characterized in that
> the final blend neutralization rate ($A \times B \times C \times 10^{-4}$) is in a range of from 2.4 to 9.0.

<2> The resin composition according to <1>, wherein the ethylene-unsaturated carboxylic acid-based copolymer (A) has a melt flow rate of from 10 g/10 min to 100 g/10 min.

<3> The resin composition according to <1> or <2> further comprising a polyamide (C) at a content of from 0.1% by mass to 25% by mass with respect to a total content of the ethylene-unsaturated carboxylic acid-based copolymer (A), the olefin polymer (B), and the polyamide (C) provided that a sum of a content of the ethylene-unsaturated carboxylic acid-based copolymer (A), a content of the olefin polymer (B), and a content of the polyamide (C) being 100% by mass.

<4> The resin composition according to any one of <1> to <3> wherein the olefin polymer (B) is an ethylene homopolymer.

<5> The resin composition according to any one of <1> to <4>, wherein a content of a structural unit formed from an unsaturated carboxylic acid in the ethylene-unsaturated carboxylic acid-based copolymer (A) is from 6% by mass to 20% by mass with respect to all structural units of the ethylene-unsaturated carboxylic acid-based copolymer (A).

<6> The resin composition according to any one of <1> to <5>, wherein the unsaturated carboxylic acid is (meth)acrylic acid.

<7> The resin composition according to any one of <1> to <6>, wherein the degree of neutralization is 75% or higher.

<8> The resin composition according to any one of <1> to <7>, wherein the metal ion is a zinc ion.

<9> The resin composition according to any one of <1> to <8>, obtained by mixing at least the ethylene-unsaturated carboxylic acid-based copolymer (A), the olefin polymer (B) and a metal ion source, and neutralizing the ethylene-unsaturated carboxylic acid-based copolymer (A) with the metal ion during the mixing.

<10> A molded article comprising the resin composition according to any one of <1> to <9>.

<11> A method of producing a resin composition, the method comprising the step of obtaining the resin composition according to any one of <1> to <9> by mixing at least the ethylene-unsaturated carboxylic acid-based copolymer (A), the olefin polymer (B) and a metal ion source to generate the ionomer resin of the ethylene-unsaturated carboxylic acid-based copolymer (A) through neutralization of the ethylene-unsaturated carboxylic acid-based copolymer (A) with the metal ion during the mixing.

Effects of Invention

The present disclosure provides a resin composition having excellent heat resistance and scratch resistance, a molded article, and a method of producing a resin composition.

DESCRIPTION OF EMBODIMENTS

The resin composition and the molded article of the present disclosure will be described in detail below.

In the following embodiments, a numerical range indicated using "to" in the present disclosure indicates a range including the numerical values described before and after "to" as the minimum value and the maximum value, respectively. In the numerical range described in a stepwise manner in the present disclosure, an upper limit value or a lower limit value described in one numerical range may be replaced with an upper limit value or a lower limit value of another numerical range described in a stepwise manner. In addition, in a numerical range described in the present disclosure, the upper limit value or the lower limit value of the numerical range may be replaced with a value described in the Examples.

In the present disclosure, in a case in which there are a plurality of substances corresponding to a component in a composition, a content or an amount of the component means the total content or the total amount of the plurality of substances present in the composition unless otherwise specified.

In the present disclosure, a combination of preferable embodiments provides a more preferable embodiments.

In the present disclosure, "(meth)acryl group" means at least one of acryl group or methacryl group, and "(meth)acrylate" means at least one of acrylate or methacrylate.

The term "ionomer resin" used herein means a compound obtained by neutralizing at least some of acidic groups contained in the ethylene-unsaturated carboxylic acid-based copolymer (A) with a metal ion.

<<Resin Composition>>

The resin composition of the present disclosure contains: an ionomer resin of from 25% by mass to 64% by mass of an ethylene-unsaturated carboxylic acid-based copolymer (A); and from 36% by mass to 75% by mass of an olefin polymer (B), in which the ionomer resin is neutralized with a metal ion to have a degree of neutralization of 52% or higher. It is noted here that a total amount of resin components that would be present when the resin composition is unneutralized in the resin composition is defined as 100% by mass.

In other words, a total amount of: a base resin of the ionomer resin, the base resin being the ethylene-unsaturated carboxylic acid-based copolymer (A); the olefin polymer (B); and other resin component(s) added as required, is defined as 100% by mass.

When a total amount of resin components after neutralization is defined as 100% by mass, the ionomer resin of the ethylene-unsaturated carboxylic acid-based copolymer (A) and the olefin polymer (B) are preferably contained in an amount of from 30% by mass to 64% by mass and from 36% by mass to 70% by mass, respectively.

The resin composition exhibits excellent heat resistance and scratch resistance by having the above-described configuration. The reason for this is unclear; however, it is presumed as follows.

When an olefin polymer is added to an ionomer resin of a conventional ethylene-unsaturated carboxylic acid-based copolymer for the purpose of imparting heat resistance, there are cases where the resulting ionomer-containing resin composition cannot exhibit sufficient heat resistance and has a reduced scratch resistance.

In contrast, the resin composition of the present disclosure contains a prescribed amount of an ionomer resin of an ethylene-unsaturated carboxylic acid-based copolymer (A) and a prescribed amount of an olefin polymer (B), and the ionomer neutralized with a metal ion has a degree of neutralization of 52% or higher; therefore, crosslinking points generated in the molecular chain by neutralization are finely dispersed, allowing the resin composition of the present disclosure to exhibit excellent heat resistance and scratch resistance.

In other words, the resin composition of the present disclosure can have satisfactory scratch resistance and satisfactory heat resistance at the same time. In addition, the resin composition of the present disclosure tends to have excellent resistance to whitening on bending as well as excellent film moldability.

<Ionomer Resin of Ethylene-Unsaturated Carboxylic acid-based copolymer (A)>

The resin composition of the present disclosure contains at least one ionomer resin of an ethylene-unsaturated carboxylic acid-based copolymer (A).

The ethylene-unsaturated carboxylic acid-based copolymer (A) contained in the ionomer resin is a copolymer obtained by copolymerizing at least ethylene and an unsaturated carboxylic acid, and has a structural unit formed from ethylene and a structural unit formed from an unsaturated carboxylic acid.

The ethylene-unsaturated carboxylic acid-based copolymer (A) may be any of a block copolymer, a random copolymer, or a graft copolymer.

From the standpoint of industrial availability, the ethylene-unsaturated carboxylic acid-based copolymer (A) is preferably a random copolymer.

Examples of the structural unit formed from an unsaturated carboxylic acid include unsaturated carboxylic acids having from 3 to 8 carbon atoms, such as acrylic acid, methacrylic acid, ethacrylic acid, itaconic acid, itaconic anhydride, fumaric acid, crotonic acid, maleic acid, and maleic anhydride.

Thereamong, the structural unit formed from an unsaturated carboxylic acid is preferably (meth)acrylic acid, more preferably methacrylic acid.

The content of the structural unit formed from ethylene is preferably from 40% by mass to 99% by mass, more preferably from 60% by mass to 99% by mass, and still more preferably from 70% by mass to 99% by mass, with respect to all structural units of the ethylene-unsaturated carboxylic acid-based copolymer (A).

The content of the structural unit formed from an unsaturated carboxylic acid is preferably from 6% by mass to 20% by mass, more preferably from 6% by mass to 18% by mass, and still more preferably from 6% by mass to 15% by mass, with respect to all structural units of the ethylene-unsaturated carboxylic acid-based copolymer (A).

When the content of the structural unit formed from an unsaturated carboxylic acid is 6% by mass or higher, superior scratch resistance tends to be attained. Meanwhile, when the content of the structural unit formed from an unsaturated carboxylic acid is 20% by mass or less, due to easiness in industrial availability, the production of the ethylene-unsaturated carboxylic acid-based copolymer (A) is likely to be easy.

Preferable specific examples of the ethylene-unsaturated carboxylic acid-based copolymer (A) include ethylene-acrylic acid copolymers and ethylene-methacrylic acid copolymers.

The ethylene-unsaturated carboxylic acid-based copolymer (A) may further contain a structural unit formed from a monomer other than ethylene and unsaturated carboxylic acid (such a structural unit is hereinafter also referred to as an "additional structural unit") in addition to the structural unit formed from ethylene and the structural unit formed from an unsaturated carboxylic acid.

Examples of the additional structural unit include unsaturated carboxylic acid esters (e.g., alkyl (meth)acrylates, such as methyl acrylate, ethyl acrylate, isobutyl acrylate, n-butyl acrylate, isooctyl acrylate, methyl methacrylate, ethyl methacrylate, isobutyl methacrylate, n-butyl methacrylate, dimethyl maleate, and diethyl maleate); unsaturated hydrocarbons (e.g., propylene, butene, 1,3-butadiene, pentene, 1,3-pentadiene, and 1-hexene), vinyl esters (e.g., vinyl acetate and vinyl propionate); oxides of vinyl sulfate, vinyl nitrate and the like; halogen compounds (e.g., vinyl chloride and vinyl fluoride); vinyl group-containing primary and secondary amine compounds; carbon monoxide; and sulfur dioxide.

When the ethylene-unsaturated carboxylic acid-based copolymer (A) contains the additional structural unit, suitable examples of the additional structural unit include a structural unit formed from an unsaturated carboxylic acid ester and a structural unit formed from unsaturated hydrocarbon and, thereamong, the additional structural unit is preferably a structural unit formed from an unsaturated carboxylic acid ester.

The unsaturated carboxylic acid ester is not particularly restricted as long as it is copolymerizable with ethylene and an unsaturated carboxylic acid, and examples thereof include unsaturated carboxylic acid alkyl esters.

Examples of the unsaturated carboxylic acid alkyl esters include unsaturated carboxylic acid alkyl esters in which an alkyl ester has from 1 to 12 carbon atoms, for example, alkyl acrylates, such as methyl acrylate, ethyl acrylate, isobutyl acrylate, n-butyl acrylate, and isooctyl acrylate; alkyl methacrylates, such as methyl methacrylate, ethyl methacrylate, and isobutyl methacrylate; and alkyl maleates, such as dimethyl maleate and diethyl maleate.

Thereamong, as the unsaturated carboxylic acid ester, alkyl esters of acrylic acid or methacrylic acid, such as methyl acrylate, ethyl acrylate, isopropyl acrylate, isobutyl acrylate, n-butyl acrylate, methyl methacrylate, ethyl methacrylate, isobutyl methacrylate, n-butyl methacrylate, and isooctyl methacrylate are preferable; lower alkyl esters (alkyl esters having from 2 to 5 carbon atoms) of acrylic acid or methacrylic acid are more preferable; $C_4$ alkyl esters of acrylic acid or methacrylic acid are still more preferable; and $C_4$ alkyl esters (most preferably isobutyl ester) of acrylic acid are particularly preferable.

When the ethylene-unsaturated carboxylic acid-based copolymer (A) contains a structural unit formed from an unsaturated carboxylic acid ester, preferable specific examples of the ethylene-unsaturated carboxylic acid-based copolymer include ethylene-(meth)acrylic acid-(meth)acrylate copolymers (e.g., an ethylene-(meth)acrylic acid-methyl acrylate copolymer, an ethylene-(meth)acrylic acid-ethyl acrylate copolymer, an ethylene-(meth)acrylic acid-isobutyl acrylate copolymer, and an ethylene-(meth)acrylic acid-n-butyl acrylate copolymer).

When the ethylene-unsaturated carboxylic acid-based copolymer (A) contains a structural unit formed from an unsaturated carboxylic acid ester, from the standpoint of ensuring flexibility, a content of the structural unit formed from an unsaturated carboxylic acid ester is preferably from 3% by mass to 25% by mass, and more preferably from 5% by mass to 20% by mass, with respect to all structural units of the ethylene-unsaturated carboxylic acid-based copolymer (A). When the content of the structural unit formed from an unsaturated carboxylic acid ester is more than 3% by mass, superior flexibility tends to be attained, and when the content is 25% by mass or less, superior inhibition of blocking tends to be attained.

The melt flow rate (MFR) of the ethylene-unsaturated carboxylic acid-based copolymer (A) is preferably from 10 g/10 min to 100 g/10 min, more preferably from 10 g/10 min to 90 g/10 min, and still more preferably from 10 g/10 min to 80 g/10 min.

When the melt flow rate is from 10 g/10 min to 100 g/10 min, superior film moldability can be provided.

The MFR can be determined by a method according to JIS K7210 (1999) at 190°C under a load of 2,160 g.

When the resin composition contains two or more kinds of ethylene-unsaturated carboxylic acid-based copolymers, the ethylene-unsaturated carboxylic acid-based copolymer (A) may have any MFR value as long as the ethylene-unsaturated carboxylic acid-based copolymers contained in the resin composition as a whole provide an MFR value which is within the above-described range.

As the ethylene-unsaturated carboxylic acid-based copolymer (A), a commercially available product on the market may be used as well. Examples of the commercially available product include NUCREL (trade name) Series manufactured by Du Pont-Mitsui Polychemicals Co., Ltd.

The content of the ethylene-unsaturated carboxylic acid-based copolymer (A) is from 25% by mass to 64% by mass. It is noted here that a total amount of resin components in the resin composition that would be present when the resin composition is unneutralized is defined as 100% by mass.

When the content of the ethylene-unsaturated carboxylic acid-based copolymer (A) is from 25% by mass to 64% by mass, the resin composition can exhibit excellent scratch resistance.

From this standpoint, the content of the ethylene-unsaturated carboxylic acid-based copolymer (A) is preferably from 35% by mass to 60% by mass, and more preferably from 35% by mass to 55% by mass.

The metal ion used for neutralization of an acid group contained in the structural unit formed from an unsaturated carboxylic acid is not particularly restricted, and examples thereof include various metal ions, for example, ions of alkali metals such as lithium, sodium, potassium, rubidium, and cesium; ions of alkaline earth metals such as magnesium and calcium; ions of transition metals such as zinc; and aluminum ion.

From the standpoint of the availability of an industrialized product, the metal ion is preferably at least one selected from a zinc ion, a magnesium ion or a sodium ion, more preferably at least one selected from a zinc ion or a sodium ion, and still more preferably a zinc ion.

These metal ions may be used singly, or in combination of two or more kinds thereof.

The metal ion may be obtained using a metal compound as a metal ion source.

Examples of the metal compound include the above-described alkali metals, alkaline earth metals, and transition metals, as well as oxides, hydroxides, bicarbonates, acetates, and formates of various metals.

From the standpoint of the availability of an industrialized product, the metal compound is preferably zinc oxide or sodium carbonate.

The ionomer resin, which is neutralized with the metal ion, has a degree of neutralization of 52% or higher.

When the degree of neutralization is 52% or higher, the resin composition of the present disclosure can exhibit excellent scratch resistance.

The degree of neutralization is preferably 55% or higher, more preferably 70% or higher, and still more preferably 80% or higher. When the degree of neutralization is 55% or higher, the scratch resistance can be further improved.

The term "degree of neutralization" used herein refers to a blending ratio (% by mole) of the metal ion with respect to the number of moles of the acid group, in particular carboxy group, contained in the ethylene-unsaturated carboxylic acid-based copolymer (A).

When the content of the structural unit formed from an unsaturated carboxylic acid in the ethylene-unsaturated carboxylic acid-based copolymer (A), the degree of neutralization of the ionomer resin, and the content of the ethylene-unsaturated carboxylic acid-based copolymer (A) are defined as A% by mass, B%, and C% by mass, respectively, the product of the content of the structural unit formed from an unsaturated carboxylic acid (A% by mass), the degree of neutralization (B%) and the content of the ethylene-unsaturated carboxylic acid-based copolymer (A) (C% by mass) (hereinafter, also referred to as "final blend neutralization rate"; $A \times B \times C \times 10^{-4}$) is in a range of from 2.4 to 9.0.

The above explanation is made with the proviso that a total amount of the resin components is defined as 100% by mass.

When the product of A, B and C is in the above-described range, the scratch resistance of the resin composition tends to be further improved.

The resin composition of the present disclosure is preferably a neutralization product of a mixture of the above-described ethylene-unsaturated carboxylic acid-based copolymer (A), the above-described olefin polymer (B) and a metal ion source, in which the ethylene-unsaturated carboxylic acid-based copolymer (A) is neutralized with the above-described metal ion.

In other words, the resin composition of the present disclosure is preferably obtained by mixing at least the above-described ethylene-unsaturated carboxylic acid-based copolymer (A), the above-described olefin polymer (B) and a metal ion source, and neutralizing the ethylene-unsaturated carboxylic acid-based copolymer (A) with the above-described metal ion during the mixing.

It is believed that, by mixing at least the ethylene-unsaturated carboxylic acid-based copolymer (A), the olefin polymer (B) and a metal ion source and neutralizing the ethylene-unsaturated carboxylic acid-based copolymer (A) with the metal ion during the mixing, since the neutralization with the metal ion is performed in a state where the ethylene-unsaturated carboxylic acid-based copolymer (A) and the olefin polymer (B) are sufficiently mixed, the resulting ionomer resin and the olefin polymer (B) are in a sufficiently kneaded state, as a result of which a resin composition having excellent scratch resistance, heat resistance and the like can be obtained.

On the other hand, for example, in a resin composition that is prepared by mixing an ionomer resin of an ethylene-unsaturated carboxylic acid-based copolymer, which is obtained by neutralizing the ethylene-unsaturated carboxylic acid-based copolymer (A) with a metal ion, and the olefin polymer (B), there are cases where, as opposed to the above-described method, the ionomer resin and the olefin polymer (B) are not sufficiently mixed and a sufficient heat resistance is thus not obtained.

In the resin composition of the present disclosure, by allowing the neutralization to proceed in a system where the ethylene-unsaturated carboxylic acid-based copolymer (A), the olefin polymer (B) and the metal ion source are all present, a fine structure (i.e. morphology) that is different from that of a resin composition obtained by simply mixing an ionomer resin and the olefin polymer (B) can be obtained.

With regard to the morphology of the resin composition of the present disclosure, it is impossible to specify the structure and properties thereof using a scanning electron microscope or the like. In other words, there are impossible or impractical circumstances that the ionomer resin according to the resin composition of the present disclosure must be specified based on a process (step).

<Olefin Polymer (B)>

The resin composition of the present disclosure contains an olefin polymer (B). The resin composition can exhibit excellent heat resistance and the like by containing the olefin polymer (B).

The term "olefin polymer (B)" used herein refers to a homopolymer of a single kind of olefin, or a copolymer of two or more kinds of olefins.

Examples of the olefin polymer (B) include ethylene homopolymers, propylene homopolymers, butene homopolymers, and copolymers of ethylene and an $\alpha$-olefin having from 3 to 8 carbon atoms.

From the standpoint of the heat resistance, the olefin polymer (B) is preferably an ethylene homopolymer, more preferably a high-density polyethylene (HDPE), a high-pressure low-density polyethylene (LDPE), or a linear low-density polyethylene (LLDPE), and still more preferably a high-density polyethylene (HDPE).

As the olefin polymer (B), a commercially available product may be used as well. Examples of the commercially available product of the olefin polymer (B) include polypropylene resins "PRIME POLYPRO", "POLYFINE" and "PRIME TPO" Series manufactured by Prime Polymer Co., Ltd.; polyethylene resins "HI-ZEX", "NEO-ZEX", "ULTZEX", "MORETEC" and "EVOLUE" Series manufactured by Prime Polymer Co., Ltd.; and low-density polyethylene "PETROCENE" Series manufactured by Tosoh Corporation.

The melt flow rate (MFR) of the olefin polymer (B) is preferably in a range of from 3.0 g/10 min to 30.0 g/10 min, and more preferably from 5.0 g/10 min to 25.0 g/10 min. When the melt flow rate is in the range, superior film moldability tends to be attained.

The MFR can be determined by a method according to JIS K7210(1999) at 190°C under a load of 2,160 g in the case of a polyethylene resin, or at 230°C under a load of 2,160 g in the case of a polypropylene resin.

The content of the olefin polymer (B) is from 36% by mass to 75% by mass, with the proviso that a total amount of resin components in the resin composition that would be present when the resin composition is unneutralized is defined as 100% by mass.

When a total amount of resin components after neutralization is defined as 100% by mass, the content of the olefin polymer (B) is preferably from 36% by mass to 70% by mass.

When the content of the olefin polymer (B) is from 36% by mass to 75% by mass, the resin composition can exhibit excellent heat resistance.

From this standpoint, the content of the olefin polymer (B) is preferably from 36% by mass to 70% by mass, and more preferably from 36% by mass to 65% by mass.

<Polyamide (C)>

The resin composition of the present disclosure may also contain a polyamide (C). By incorporating the polyamide (C) into the resin composition, the resin composition can be imparted with superior scratch resistance and the like.

The polyamide (C) is not particularly restricted, and examples thereof include polycondensates of a dicarboxylic acid, such as oxalic acid, adipic acid, sebacic acid, dodecanoic acid, terephthalic acid, isophthalic acid or 1,4-cyclohexyl dicarboxylic acid, and a diamine, such as ethylenediamine, tetramethylenediamine, pentamethylenediamine, hexamethylenediamine, decamethylenediamine, 1,4-cyclohexyldiamine or $m$-xylene diamine; cyclic lactam ring-opened polymers, such as $\varepsilon$-caprolactam and $\omega$-laurolactam; polycondensates of aminocarboxylic acids, such as 6-aminocaproic acid, 9-aminononanoic acid, 11-aminoundecanoic acid, and 12-aminododecanoic acid; and copolymers of the above-described cyclic lactam, dicarboxylic acid and diamine.

The polyamide (C) may be used singly, or in combination of two or more kinds thereof.

As the polyamide (C), a commercially available product may be used as well. Examples of the commercially available product of the polyamide (C) include nylon 4, nylon 6, nylon 46, nylon 66, nylon 610, nylon 612, nylon 6T, nylon 11, nylon 12, copolymer nylons (e.g., nylon 6/66, nylon 6/12, nylon 6/610, nylon 66/12, and nylon 6/66/610), nylon MXD6, and nylon 46.

Thereamong, from the standpoints of improvement in the scratch resistance and the ease of obtaining the product inexpensively, the polyamide (C) is preferably at least one selected from the group consisting of nylon 6 and nylon 6/12.

A content of the polyamide (C) is preferably from 0.1% by mass to 25% by mass with respect to a total content of the ethylene-unsaturated carboxylic acid-based copolymer (A), the olefin polymer (B), and the polyamide (C). It is noted here that a sum of the content of the ethylene-unsaturated carboxylic acid-based copolymer (A), the content of the olefin polymer (B), and the content of the polyamide (C) is defined as 100% by mass.

From the standpoint of the scratch resistance, the content of the polyamide (C) is more preferably from 3% by mass to 25% by mass, and still more preferably from 7% by mass to 25% by mass.

When a total amount of resin components after neutralization is defined as 100% by mass, the content of the polyamide (C) is preferably from 0.1% by mass to 25% by mass.

<Other Additives>

In the resin composition of the present disclosure, various additives may be incorporated as long as that does not impair the effects of the present disclosure. Examples of such additives include antistatic agents, antioxidants, heat stabilizers, light stabilizers, UV absorbers, pigments, dyes, lubricants, blocking inhibitors, antifungal agents, antibacterial agents, flame retardants, flame retardant aids, crosslinking agents, crosslinking aids, foaming agents, foaming aids, inorganic fillers, and fiber reinforcing materials.

These additives can be blended during or after the preparation of the resin composition, or may be blended into the ethylene-unsaturated carboxylic acid-based copolymer (A), the olefin polymer (B) and the polyamide (C) in advance.

<<Method of Producing Resin Composition>>

A method of producing the resin composition of the present disclosure is not particularly restricted as long as at least the ethylene-unsaturated carboxylic acid-based copolymer (A), the olefin polymer (B) and a metal ion source can be mixed, and the resin composition of the present disclosure can be produced by any known method.

Examples of the method include: a method of knead-mixing a mixture that contains an ionomer resin of the ethylene-unsaturated carboxylic acid-based copolymer (A), the olefin polymer (B) and, as required, the polyamide (C) and the like using a kneader or the like; and a method of obtaining a resin composition by mixing at least the ethylene-unsaturated carboxylic acid-based copolymer (A), the olefin polymer (B) and a metal ion source, and generating an ionomer resin of the ethylene-unsaturated carboxylic acid-based copolymer (A) through neutralization of the ethylene-unsaturated carboxylic acid-based copolymer (A) with a metal ion during the mixing.

From the standpoints of the heat resistance and the scratch resistance, a method of producing a resin composition, which method includes the step of obtaining the resin composition of the present disclosure by mixing at least the ethylene-unsaturated carboxylic acid-based copolymer (A), the olefin polymer (B) and a metal ion source, and generating an ionomer resin of the ethylene-unsaturated carboxylic acid-based copolymer (A) through neutralization of the ethylene-unsaturated carboxylic acid-based copolymer (A) with a metal ion during the mixing, is preferable.

The reason for this is not clear; however, it is believed that, by neutralizing the ethylene-unsaturated carboxylic acid-based copolymer (A) with a metal ion after (or while) sufficiently mixing at least the ethylene-unsaturated carboxylic acid-based copolymer (A), the olefin polymer (B) and the metal ion source, the resulting ionomer resin of the ethylene-unsaturated carboxylic acid-based copolymer (A) is sufficiently kneaded with the olefin polymer (B) and the like, so that a resin composition having excellent scratch resistance, heat resistance and the like can be obtained.

The ethylene-unsaturated carboxylic acid-based copolymer (A), the olefin polymer (B) and the metal ion source that are used in the mixing of the ethylene-unsaturated carboxylic acid-based copolymer (A), the olefin polymer (B) and the metal ion source have the same meanings as the above-described ethylene-unsaturated carboxylic acid-based copolymer (A), olefin polymer (B) and metal ion source, and their preferable ranges are also the same.

A method of mixing the ethylene-unsaturated carboxylic acid-based copolymer (A), the olefin polymer (B) and the metal ion source is not particularly restricted, and the mixing can be performed using any known mixing apparatus.

Examples of the mixing apparatus include a kneading/extrusion molding evaluation tester, a uniaxial extruder, a biaxial extruder, a Banbury mixer, and a kneader.

It is more preferable to obtain the resin composition by generating an ionomer resin of the ethylene-unsaturated carboxylic acid-based copolymer (A) with an addition of the metal ion source and the like while melt-kneading the ethylene-unsaturated carboxylic acid-based copolymer (A) and the olefin polymer (B) in an extruder.

The melt-kneading temperature is a temperature of not lower than the melting point of each of the ethylene-unsaturated carboxylic acid-based copolymer (A) and the olefin polymer (B), which is generally preferably 150°C or higher, and more preferably in a range of from 160°C to 280°C, and the melt-kneading is preferably performed while maintaining a retention time of 60 seconds or longer.

A screw extruder is preferably one which is capable of sufficiently kneading the ethylene-unsaturated carboxylic acid-based copolymer (A) and the olefin polymer (B) and has a vent mechanism for removing by-products generated by neutralization (ionization reaction).

<Laminated Body>

The laminated body of the present disclosure preferably includes at least a layer that contains the resin composition of the present disclosure. When the laminated body has a layer formed from the resin composition of the present disclosure, the laminated body tends to have excellent heat resistance and scratch resistance. Particularly, in the laminated body, superior heat resistance and scratch resistance tend to be attained by disposing an ionomer resin of the ethylene-unsaturated carboxylic acid-based copolymer (A) as a layer.

From the standpoints of the heat resistance and the scratch resistance, a ratio (a/b) of a thickness (a) of the layer formed from the resin composition of the present disclosure with respect to a thickness (b) of the layer formed from the ionomer resin of the ethylene-unsaturated carboxylic acid-based copolymer is preferably from 0.05 to lower than 1.0.

In addition to the layer containing the resin composition, the laminated body may further include plural layers of different compositions and forms.

<Molded Article>

The molded article of the present disclosure may contain the resin composition of the present disclosure. The molded article of the present disclosure contains the resin composition and thus has excellent heat resistance and scratch resistance.

The molded article can be obtained in various shapes by various molding methods, such as extrusion molding, injection molding, compression molding, and hollow molding.

For example, the molded article such as a sheet or a film that is molded using an inflation film molding machine or a cast film/sheet molding machine, is characterized by having excellent resistance to thermal fusion and blocking, and showing small shrinkage when exposed to a high-temperature environment.

Such a molded article of a sheet, a film or the like may be configured by a single layer.

In order to improve the adhesion with various substrates, the molded article may be formed as a laminated body co-extruded with an adhesive resin using a co-extrusion molding machine.

In order to improve the adhesive strength of the surface of the resin composition of the present disclosure, for example, a known surface activation treatment, such as a plasma treatment, a flame treatment, a corona discharge treatment, a firing treatment, an undercoating treatment or an ultraviolet irradiation treatment, may be performed as well.

Examples of the adhesive resin that can be layered with the resin composition of the present invention include blends containing at least one selected from: ethylene-unsaturated carboxylic acid copolymers, ethylene-unsaturated carboxylic acid-unsaturated carboxylic acid alkyl ester copolymers, ionomers of the copolymers, ethylene-unsaturated carboxylic acid alkyl ester copolymers, ethylene-vinyl acetate copolymers, ethylene-unsaturated carboxylic acid alkyl ester-carbon monoxide copolymers, grafts of the copolymers with an unsaturated carboxylic acid, or polyethylene resins such as low-density polyethylenes and linear low-density polyethylenes.

Other examples of extrusion molding of the resin composition of the present disclosure include a method of forming a layered body by thermally adhering the resin composition of the present disclosure onto a surface of an additional substrate using an extrusion coating-molding machine. In this case, a multilayer material in which the substrate and the molded article are layered is obtained.

Examples of the substrate include pieces of paper such as printing papers, various metal foils, various metal plates such as steel plates, polyolefin films and sheets, woven fabrics, and nonwoven fabrics. The substrate may have a single-layer structure or a multi-layer structure.

When the resin composition of the present disclosure is disposed on the surface of other substrate using an extrusion coating-molding machine, the resin composition of the present disclosure may be disposed in a single layer, or may be disposed via an adhesive resin layer using a co-extrusion coating-molding machine so as to improve the adhesion with various substrates.

Examples of the adhesive resin include blends composed of any one or more selected from the above-described ethylene copolymers or grafts of these copolymers with an unsaturated carboxylic acid.

The molded article of the present disclosure has excellent heat resistance and scratch resistance; therefore, it can be suitably used in industrial materials, food packaging materials, electronic components, electronic component packaging materials, civil engineering materials, golf ball materials, miscellaneous goods, and the like.

EXAMPLES

The present disclosure will now be described more concretely by way of Examples thereof; however, the present disclosure is not restricted thereto within the gist of the present disclosure. It is noted here that, unless otherwise specified, "part(s)" is based on mass.

(Example 1)

An ionized masterbatch was prepared by blending an ethylene-unsaturated carboxylic acid-based copolymer 1 (ethylene-methacrylic acid copolymer) with zinc oxide.

To a screw extruder equipped with a vent having a diemeter of 65 mm, an ethylene-unsaturated carboxylic acid-based copolymer (A), an olefin polymer (B), and the thus obtained ionized masterbatch were supplied all at once such that the resin ratio (% by mass) shown in Table 1 was attained (i.e. the ratio was calculated including the resin of the masterbatch in the ethylene-unsaturated carboxylic acid-based copolymer (A)), and these materials were extruded at a resin temperature of 240°C and an extrusion rate of 12 kg/hr. The generated gas and water were removed at a vent using a vacuum pump. The thus extruded strand was cooled in water and then cut to obtain a resin composition pellet.

-Production of Press Sheet-

The thus obtained resin composition was press-molded using a press molding machine set at 200°C, whereby a 2 mm-thick press sheet having a size of 150 mm × 150 mm was produced.

-Production of Cast Film-

The thus obtained resin composition was extruded at a molding temperature of 250°C using a cast film molding machine (diemeter: 40 mm) and subsequently passed through nip rolls (nip molding), whereby a 100 $\mu$m-thick film was molded.

[Evaluation]

-Scratch Resistance (Gakushin-Type Wear Test)-

Under the below-described conditions, a cotton canvas was attached to and rubbed on the surface of the press sheet with a load being applied thereto. Thereafter, the area of the press sheet surface remaining unscratched was visually measured, and the ratio of the area of the surface remaining unscratched (residual ratio (%)) was calculated using the below-described formula to evaluate the scratch resistance based on the below-described evaluation criteria.
An evaluation criteria of "B" or better was judged as excellent scratch resistance. The evaluation results are shown in Table 1.

-Test Conditions-

- Cotton canvas: No. 10
- Load: 450 g
- Number of reciprocations: 100 times

$$\text{Residual ratio (\%)} = \text{(Area of surface remaining unscratched)/(Rubbed area)} \times 100$$

A higher residual ratio indicates superior scratch resistance of the press sheet.

<Evaluation Criteria>

AA: The residual ratio was 95% or higher.
A: The residual ratio was 90% or higher but lower than 95%.
B: The residual ratio was 70% or higher but lower than 90%.
C: The residual ratio was lower than 70%.

-Film Moldability-

The resin composition obtained above was molded by a nip molding method using a cast film molding machine (diemeter: 40 mm) at a molding temperature of 250°C, and whether or not a 100 $\mu$m-thick cast film could be molded was evaluated as follows. The evaluation results are shown in Table 1.

<Evaluation Criteria>

A: A 100 μm-thick film was molded.
B: A 100 μm-thick film was not molded, or the resin composition was not obtained.

-Heat Resistance-

The cast film produced above was cut into a size of 200 mm in length and 200 mm in width to prepare an evaluation film. A stainless-steel vessel was charged with 500 mL of boiling water and left to stand on the evaluation film for 30 minutes. Thereafter, a change in the outer appearance of the evaluation film was visually observed to evaluate the heat resistance based on the following evaluation criteria.

An evaluation criteria of "B" or better was judged as excellent heat resistance. The evaluation results are shown in Table 1.

<Evaluation Criteria>

A: No change was observed.
B: A change in the film outer appearance was observed; however, the film was not fused to the vessel.
C: The film was fused to the vessel.

-Resistance to Whitening on Bending-

After storing the above-produced press sheet in a -15°C environment for 2 hours, the press sheet was bent by 180°, and the presence or absence of whitening of the press sheet after the 180° bending was visually observed and evaluated as follows. The evaluation results are shown in Table 1.

<Evaluation Criteria>

A: No whitening was observed.
B: Whitening was observed.

(Examples 2 to 12 and Comparative Examples 1 to 10)

Press sheets and cast films of resin compositions of Examples 2 to 12 and Comparative Examples 1 to 10 were produced in the same manner as in Example 1 except that the formulations of the respective resin compositions were changed as shown in Table 1 below, and the thus produced press sheets and cast films were evaluated in the same manner as in Example 1. The evaluation results are shown in Table 1.

[Table 1]

| Formulation (% by mass) | MFR (g/10 min) | MAA (% by mass) | Example | | | | | | | | | | | | Comparative Example | | | | | | | | | |
|---|---|---|---|---|---|---|---|---|---|---|---|---|---|---|---|---|---|---|---|---|---|---|---|---|
| | | | 1 | 2 | 3 | 4 | 5 | 6 | 7 | 8 | 9 | 10 | 11 | 12 | 1 | 2 | 3 | 4 | 5 | 6 | 7 | 8 | 9 | 10 |
| Olefin polymer 1 | 12 | 0 | 50 | 50 | 50 | 40 | 60 | - | 60 | 60 | 60 | 70 | 45 | 40 | 50 | 30 | 20 | 80 | 35 | - | - | - | - | - |
| Olefin polymer 2 | 1 | 0 | - | - | - | - | - | 50 | - | - | - | - | - | - | - | - | - | - | - | 100 | - | - | - | 70 |
| Ethylene-unsaturated carboxylic acid-based copolymer 1 | 23 | 8 | 50 | 50 | 50 | 60 | 40 | 50 | - | - | - | 30 | 45 | 40 | 50 | 70 | 80 | 20 | 35 | - | - | - | - | - |
| Ethylene-unsaturated carboxylic acid-based copolymer 2 | 35 | 10 | - | - | - | - | - | - | 40 | - | - | - | - | - | - | - | - | - | - | - | - | - | - | - |
| Ethylene-unsaturated carboxylic acid-based copolymer 3 | 100 | 11 | - | - | - | - | - | - | - | 40 | - | - | - | - | - | - | - | - | - | - | - | - | - | - |
| Ethylene-unsaturated carboxylic acid-based copolymer 4 | 60 | 15 | - | - | - | - | - | - | - | - | 40 | - | - | - | - | - | - | - | - | - | - | - | - | - |
| Polyamide 1 | - | - | - | - | - | - | - | - | - | - | - | - | 10 | 20 | - | - | - | - | 30 | - | - | - | - | - |
| Ionomer resin 1 | 1 | (15) | - | - | - | - | - | - | - | - | - | - | - | - | - | - | - | - | - | - | 100 | - | - | - |
| Ionomer resin 2 | 1.1 | (8) | - | - | - | - | - | - | - | - | - | - | - | - | - | - | - | - | - | - | - | 100 | - | 30 |
| Random PP | 8 (230°C) | 0 | - | - | - | - | - | - | - | - | - | - | - | - | - | - | - | - | - | - | - | - | 100 | - |
| | Degree of neutralization of ionomer resin (%) | | 60 | 80 | 100 | 100 | 100 | 100 | 100 | 100 | 100 | 100 | 100 | 100 | 40 | 100 | 100 | 100 | 100 | 0 | 59 | 50 | 0 | 50 |
| | Final blend neutralization rate (MAA × Degree of neutralization × Ethylene-unsaturated carboxylic acid-based copolymer ratio) | | 2.4 | 3.2 | 4.0 | 4.8 | 3.2 | 4.0 | 4.0 | 4.4 | 6.0 | 2.4 | 3.6 | 3.2 | 1.6 | 5.6 | 6.4 | 1.6 | 2.8 | 0 | 8.9 | 4.0 | 0 | 1 |
| [Evaluation] | | | | | | | | | | | | | | | | | | | | | | | | |
| Heat resistance | | | A | A | A | A | A | A | A | A | A | A | A | A | A | could not be evaluated | C | A | could not be evaluated | A | C | C | A | A |
| Scratch resistance | | | B | A | A | A | A | A | A | A | A | B | AA | AA | C | | A | C | | C | A | A | C | C |
| Resistance to whitening on bending | | | A | A | A | A | A | A | A | A | A | A | A | A | A | | A | B | | B | A | A | B | A |
| Film moldability | | | A | A | A | A | A | A | A | A | A | A | A | A | A | B | A | A | B | A | A | A | A | A |

13

The abbreviations used in Table 1 are as follows. It is noted here that "-" in Table 1 indicates that the corresponding component was not contained. The MFR value of the random PP was measured at 230°C under a load of 2,160 g.

- MAA; methacrylic acid
- Olefin polymer 1; a high-density polyethylene (HDPE) (trade name: HI-ZEX (registered trademark) 1300J, manufactured by Primer Polymer Co., Ltd.)
- Olefin polymer 2; a high-density polyethylene (HDPE) (trade name: HI-ZEX (registered trademark) 3600F, manufactured by Primer Polymer Co., Ltd.)
- Ethylene-unsaturated carboxylic acid-based copolymer 1; an ethylene-methacrylic acid copolymer (content of structural unit formed from methacrylic acid: 8% by mass, MFR (190°C, 2,160-g load): 23 g/10 min)
- Ethylene-unsaturated carboxylic acid-based copolymer 2; an ethylene-methacrylic acid copolymer (content of structural unit formed from methacrylic acid: 10% by mass, MFR (190°C, 2,160-g load): 35 g/10 min)
- Ethylene-unsaturated carboxylic acid-based copolymer 3; an ethylene-methacrylic acid copolymer (content of structural unit formed from methacrylic acid: 11% by mass, MFR (190°C, 2,160-g load): 100 g/10 min)
- Ethylene-unsaturated carboxylic acid-based copolymer 4; an ethylene-methacrylic acid copolymer (content of structural unit formed from methacrylic acid: 15% by mass, MFR (190°C, 2,160-g load): 60 g/10 min)
- Polyamide 1; 6 nylon (trade name: UBE NYLON 6, manufactured by Ube Industries, Ltd.)
- Ionomer resin 1; an ionomer resin of an ethylene-methacrylic acid copolymer (content of structural unit formed from methacrylic acid: 15% by mass, metal ion: zinc ion, degree of neutralization: 59%, MFR (190°C, 2,160-g load): 1 g/10 min)
- Ionomer resin 2; an ionomer of an ethylene-methacrylic acid copolymer (content of structural unit formed from methacrylic acid: 8% by mass, metal ion: zinc ion, degree of neutralization: 50%, MFR (190°C, 2,160-g load): 1.1 g/10 min)
- Random PP; a random polypropylene (trade name: F219DA, manufactured by Primer Polymer Co., Ltd., degree of neutralization: 0%, MFR (230°C, 2,160-g load): 8 g/10 min)

(Examples 13 to 17 and Comparative Examples 11 and 12)

Each of the resin compositions for first layer, which had the respective formulations shown in Table 2 (prepared in the same manner as in Example 1), and the ionomer resin 1 for second layer were co-extruded at a molding temperature of 250°C using a two-kind bilayer cast molding machine (diemeter: 40 mm), and subsequently passed through nip rolls (nip molding), whereby bilayer films having a total thickness of 100 $\mu$m were produced.
The thus obtained bilayer films were each evaluated in the same manner as in Example 1. The evaluation results are shown in Table 2.

(Comparative Example 13)

A resin composition was prepared in the same manner as in Example 1, except that the formulation of the resin composition was changed to that of the resin composition for second layer as shown in Table 2. The thus obtained resin composition was extruded at molding temperature of 250°C using a cast film molding machine (diemeter: 40 mm) and subsequently passed through nip rolls (nip molding) to mold a 100 $\mu$m-thick film, which was evaluated in the same manner as in Example 1. The evaluation results are shown in Table 2.

[Table 2]

| | | | | Example | | | | | Comparative Example | | |
|---|---|---|---|---|---|---|---|---|---|---|---|
| | | | | 13 | 14 | 15 | 16 | 17 | 11 | 12 | 13 |
| Layer configuration | Formulation (% by mass) | MFR (g/ 10 min) | MAA (% by mass) | | | | | | | | |
| First layer | Olefin polymer 1 | 12 | 0 | 50 | 50 | 50 | 50 | 50 | - | 100 | - |
| | Ethylene-unsaturated carboxylic acid-based copolymer 1 | 23 | 8 | 50 | 50 | 50 | 50 | 50 | - | - | - |
| | Random PP | 8 (230°C) | 0 | - | - | - | - | - | 100 | - | - |
| | | Degree of neutralization of ionomer resin (%) | | 100 | 100 | 100 | 100 | 100 | - | - | - |
| | | Final blend neutralization rate (MAA × Degree of neutralization × Ethylene-unsaturated carboxylic acid-based copolymer ratio) | | 4.0 | 4.0 | 4.0 | 4.0 | 4.0 | 0 | 0 | - |
| | Thickness (μm) | | | 10 | 25 | 50 | 75 | 100 | 25 | 25 | 0 |
| Second layer | Ionomer resin 1 | 1 | (15) | 100 | 100 | 100 | 100 | - | 100 | 100 | 100 |
| | | Degree of neutralization of ionomer resin (%) | | 59 | 59 | 59 | 59 | - | 59 | 59 | 59 |
| | | Final blend neutralization rate (MAA × Degree of neutralization × Ethylene-unsaturated carboxylic acid-based copolymer ratio) | | 8.9 | 8.9 | 8.9 | 8.9 | - | 8.9 | 8.9 | 8.9 |
| | Thickness (μm) | | | 90 | 75 | 50 | 25 | 0 | 75 | 75 | 100 |
| [Evaluation] | | | | | | | | | | | |
| Heat resistance | | | | A | A | A | A | A | A | B | C |
| Scratch resistance | | | | AA | AA | A | A | A | C | C | AA |
| Resistance to whitening on bending | | | | A | A | A | A | A | B | A | A |
| Film moldability | | | | A | A | A | A | A | A | A | A |

In Table 2, "-" indicates that the corresponding component was not contained.

As shown in Tables 1 and 2, the press sheets, cast films and bilayer films that were formed from the respective resin compositions of Examples 1 to 17 had excellent heat resistance and excellent scratch resistance as well as excellent resistance to whitening on bending and excellent film moldability.

On the other hand, the scratch resistance was poor in Comparative Example 1, where the degree of neutralization was lower than 52%. The scratch resistance was poor also in Comparative Example 6, where an ionomer resin of the ethylene-unsaturated carboxylic acid-based copolymer (A) was not incorporated, and in Comparative Example 11, where a polypropylene resin was incorporated but neither an ionomer resin of the ethylene-unsaturated carboxylic acid-based copolymer (A) nor the olefin polymer (B). Moreover, in Comparative Examples 6 and 9, the resistance to whitening on bending was also poor in addition to scratch resistance.

In Comparative Example 2, where an ionomer resin of more than 64% by mass of the ethylene-unsaturated carboxylic acid-based copolymer (A) and less than 36% by mass of the olefin polymer (B) were incorporated, and in Comparative Example 5, where less than 36% by mass of the olefin polymer (B) was incorporated, a resin composition could not be prepared, and the film moldability was poor.

The heat resistance was poor in Comparative Example 3, where an ionomer resin of more than 64% by mass of the ethylene-unsaturated carboxylic acid-based copolymer (A) and less than 36% by mass of the olefin polymer (B) were incorporated. Meanwhile, in Comparative Example 4, where an ionomer resin of less than 25% by mass of the ethylene-unsaturated carboxylic acid-based copolymer (A) and more than 75% by mass of the olefin polymer (B) were incorporated, the scratch resistance was poor.

Further, the heat resistance was poor in Comparative Examples 7, 8 and 13, where an ionomer resin was incorporated but not the olefin polymer (B).

Moreover, the scratch resistance was poor in Comparative Example 10, where an ionomer resin that had been previously neutralized with a metal ion and the olefin polymer (B) were incorporated in place of mixing an ionomer resin of the ethylene-unsaturated carboxylic acid-based copolymer (A), the olefin polymer (B) and a metal ion source. The scratch resistance was also poor in Comparative Example 12, where a first layer containing the olefin polymer (B) and a second layer containing an ionomer resin were formed.

From the above, it is seen that the resin composition of the present disclosure and the laminated bodies using the same have excellent heat resistance and excellent scratch resistance as well as excellent resistance to whitening on bending and excellent film moldability; therefore, they can be suitably used in various applications such as films and sheets of industrial materials, miscellaneous goods, food packaging materials, electronic components, electronic component packaging materials, civil engineering materials, golf ball materials, and the like.

**Claims**

1. A resin composition comprising:

   an ionomer resin of from 25% by mass to 64% by mass of an ethylene-unsaturated carboxylic acid-based copolymer (A); and
   from 36% by mass to 75% by mass of an olefin polymer (B),
   the ionomer resin being neutralized with a metal ion and having a degree of neutralization of 52% or higher, with the proviso that a total amount of resin components in the resin composition that would be present when the resin composition is unneutralized being defined as 100% by mass,
   a final blend neutralization rate ($A \times B \times C \times 10^{-4}$); with the final blend neutralization rate being defined as a product of:

      a content of the structural unit formed from an unsaturated carboxylic acid in the ethylene-unsaturated carboxylic acid-based copolymer (A) (A% by mass);
      the degree of neutralization of the ionomer resin (B%); and
      a content of the ethylene-unsaturated carboxylic acid-based copolymer (A) (C% by mass); and **characterized in that**
      the final blend neutralization rate ($A \times B \times C \times 10^{-4}$) is in a range of from 2.4 to 9.0.

2. The resin composition according to claim 1, wherein the ethylene-unsaturated carboxylic acid-based copolymer (A) has a melt flow rate of from 10 g/10 min to 100 g/10 min.

3. The resin composition according to claim 1 or 2, further comprising a polyamide (C) at a content of from 0.1% by mass to 25% by mass with respect to a total content of the ethylene-unsaturated carboxylic acid-based copolymer (A), the olefin polymer (B), and the polyamide (C) provided that a sum of a content of the ethylene-unsaturated carboxylic acid-based copolymer (A), a content of the olefin polymer (B), and a content of the polyamide (C) being 100% by mass.

4. The resin composition according to any one of claims 1 to 3, wherein the olefin polymer (B) is an ethylene homopolymer.

5. The resin composition according to any one of claims 1 to 4, wherein a content of a structural unit formed from an unsaturated carboxylic acid in the ethylene-unsaturated carboxylic acid-based copolymer (A) is from 6% by mass to 20% by mass with respect to all structural units of the ethylene-unsaturated carboxylic acid-based copolymer (A).

6. The resin composition according to any one of claims 1 to 5, wherein the unsaturated carboxylic acid is (meth)acrylic acid.

7. The resin composition according to any one of claims 1 to 6, wherein the degree of neutralization is 75% or higher.

8. The resin composition according to any one of claims 1 to 7, wherein the metal ion is a zinc ion.

9. The resin composition according to any one of claims 1 to 8, obtained by mixing at least the ethylene-unsaturated carboxylic acid-based copolymer (A), the olefin polymer (B) and a metal ion source, and neutralizing the ethylene-unsaturated carboxylic acid-based copolymer (A) with the metal ion during the mixing.

10. A molded article comprising the resin composition according to any one of claims 1 to 9.

11. A method of producing a resin composition, the method comprising the step of obtaining the resin composition according to any one of claims 1 to 9 by mixing at least the ethylene-unsaturated carboxylic acid-based copolymer (A), the olefin polymer (B) and a metal ion source to generate the ionomer resin of the ethylene-unsaturated carboxylic acid-based copolymer (A) through neutralization of the ethylene-unsaturated carboxylic acid-based copolymer (A) with the metal ion during the mixing.


**Patentansprüche**

1. Harzzusammensetzung, die Folgendes umfasst:

   ein Ionomerharz aus 25 Masseprozent bis 64 Masseprozent eines Copolymers (A) auf Basis von ethylenungesättigter Carbonsäure; und
   36 Masseprozent bis 75 Masseprozent eines Olefinpolymers (B),
   wobei das Ionomerharz mit einem Metallion neutralisiert ist und einen Neutralisationsgrad von 52 % oder mehr aufweist, mit der Maßgabe, dass die Gesamtmenge der Harzkomponenten in der Harzzusammensetzung, die vorhanden wäre, wenn die Harzzusammensetzung nicht neutralisiert wäre, als 100 Masseprozent definiert ist, eine endgültige Blend-Neutralisierungsrate ($A \times B \times C \times 10^{-4}$); wobei die endgültige Blend-Neutralisierungsrate als Produkt aus Folgendem definiert ist:

   einem Gehalt der aus einer ungesättigten Carbonsäure ausgebildeten Struktureinheit in dem Copolymer (A) auf Basis von ethylenungesättigter Carbonsäure (A Masseprozent);
   dem Neutralisationsgrad des Ionomerharzes (B%); und
   einem Gehalt des Copolymers (A) auf Basis von ethylenungesättigter Carbonsäure (C Masseprozent); und
   **dadurch gekennzeichnet, dass**
   die endgültige Blend-Neutralisationsrate ($A \times B \times C \times 10^{-4}$) in einem Bereich von 2,4 bis 9,0 liegt.

2. Harzzusammensetzung nach Anspruch 1, wobei das Copolymer (A) auf Basis von ethylenungesättigter Carbonsäure eine Schmelzflussrate von 10 g/10 min bis 100 g/10 min aufweist.

3. Harzzusammensetzung nach Anspruch 1 oder 2, ferner umfassend ein Polyamid (C) mit einem Gehalt von 0,1 Masseprozent bis 25 Masseprozent in Bezug auf den Gesamtgehalt des Copolymers (A) auf Basis von ethylenungesättigter Carbonsäure, des Olefinpolymers (B) und des Polyamids (C), mit der Maßgabe, dass die Summe des Gehalts des Copolymers (A) auf Basis von ethylenungesättigter Carbonsäure, des Gehalts des Olefinpolymers (B) und des Gehalts des Polyamids (C) 100 Masseprozent beträgt.

4.  Harzzusammensetzung nach einem der Ansprüche 1 bis 3, wobei das Olefinpolymer (B) ein Ethylenhomopolymer ist.

5.  Harzzusammensetzung nach einem der Ansprüche 1 bis 4, wobei der Gehalt einer Struktureinheit, die aus einer ungesättigten Carbonsäure ausgebildet ist, in dem Copolymer (A) auf der Basis von ethlyenungesättigter Carbonsäure 6 Masseprozent bis 20 Masseproze, bezogen auf alle Struktureinheiten des Copolymers (A) auf der Basis von ethylenungesättigter Carbonsäure, beträgt.

6.  Harzzusammensetzung nach einem der Ansprüche 1 bis 5, wobei die ungesättigte Carbonsäure (Meth)acrylsäure ist.

7.  Harzzusammensetzung nach einem der Ansprüche 1 bis 6, wobei der Neutralisationsgrad 75 % oder mehr beträgt.

8.  Harzzusammensetzung nach einem der Ansprüche 1 bis 7, wobei das Metallion ein Zinkion ist.

9.  Harzzusammensetzung nach einem der Ansprüche 1 bis 8, erhalten durch Mischen mindestens des Copolymers (A) auf Basis von ethylenungesättigter Carbonsäure, des Olefinpolymers (B) und einer Metallionenquelle und Neutralisieren des Copolymers (A) auf Basis von ethylenungesättigter Carbonsäure mit dem Metallion während des Mischens.

10. Formkörper, der die Harzzusammensetzung nach einem der Ansprüche 1 bis 9 enthält.

11. Verfahren zur Herstellung einer Harzzusammensetzung, wobei das Verfahren den Schritt des Erhaltens der Harzzusammensetzung nach einem der Ansprüche 1 bis 9 durch Mischen mindestens des Copolymers (A) auf Basis von ethylenungesättigter Carbonsäure, des Olefinpolymers (B) und einer Metallionenquelle umfasst, um das Ionomerharz des Copolymers (A) auf Basis von ethylenungesättigter Carbonsäure durch Neutralisation des Copolymers (A) auf Basis von ethylenungesättigter Carbonsäure mit dem Metallion während des Mischens zu erzeugen.

## Revendications

1.  Composition de résine, comprenant

    une résine ionomère composée de 25 % en masse à 64 % en masse d'un copolymère (A) à base d'acide carboxylique insaturé d'éthylène ; et
    de 36% en masse à 75% en masse d'un polymère d'oléfine (B),
    la résine ionomère étant neutralisée par un ion métallique et ayant un degré de neutralisation de 52 % ou plus,
    à condition que la quantité totale de composants de résine dans la composition de résine qui serait présente lorsque la composition de résine n'est pas neutralisée soit définie comme étant 100 % en masse,
    un taux de neutralisation de mélange final ($A \times B \times C \times 10^{-4}$) ; le taux de neutralisation de mélange final étant défini comme le produit de :

    une teneur de la unité structurelle formée d'un acide carboxylique insaturé dans le copolymère (A) à base d'acide carboxylique insaturé d'éthylène (A% en masse) ;
    le degré de neutralisation de la résine ionomère (B%) ; et
    une teneur du copolymère (A) à base d'acide carboxylique insaturé d'éthylène (C% en masse) ; et **caractérisée en ce que**
    le taux de neutralisation de mélange final ($A \times B \times C \times 10^{-4}$) est compris entre 2,4 et 9,0.

2.  Composition de résine selon la revendication 1, dans laquelle le copolymère (A) à base d'acide carboxylique insaturé d'éthylène a un taux de fluidité à l'état fondu compris entre 10 g/10 min et 100 g/10 min.

3.  Composition de résine selon la revendication 1 ou 2, comprenant en outre un polyamide (C) à une teneur allant de 0,1 % en masse à 25 % en masse par rapport à une teneur totale du copolymère (A) à base d'acide carboxylique insaturé d'éthylène, du polymère d'oléfine (B) et du polyamide (C), à condition que la somme d'une teneur du copolymère (A) à base d'acide carboxylique insaturé d'éthylène, d'une teneur du polymère d'oléfine (B) et d'une teneur du polyamide (C) soit égale à 100 % en masse.

**4.** Composition de résine selon l'une quelconque des revendications 1 à 3, dans laquelle le polymère d'oléfine (B) est un homopolymère d'éthylène.

**5.** Composition de résine selon l'une quelconque des revendications 1 à 4, dans laquelle une teneur d'une unité structurale formée d'un acide carboxylique insaturé dans le copolymère (A) à base d'acide carboxylique insaturé d'éthylène est comprise entre 6 % en masse et 20 % en masse par rapport à toutes les unités structurales du copolymère (A) à base d'acide carboxylique insaturé d'éthylène.

**6.** Composition de résine selon l'une quelconque des revendications 1 à 5, dans laquelle l'acide carboxylique insaturé est l'acide (méth)acrylique.

**7.** Composition de résine selon l'une quelconque des revendications 1 à 6, dans laquelle le degré de neutralisation est supérieur ou égal à 75 %.

**8.** Composition de résine selon l'une quelconque des revendications 1 à 7, dans laquelle l'ion métallique est un ion zinc.

**9.** Composition de résine selon l'une quelconque des revendications 1 à 8, obtenue par mélange d'au moins le copolymère (A) à base d'acide carboxylique insaturé d'éthylène, le polymère d'oléfine (B) et une source d'ions métalliques, et neutralisation du copolymère (A) à base d'acide carboxylique insaturé d'éthylène par l'ion métallique au cours du mélange.

**10.** Article moulé comprenant la composition de résine selon l'une quelconque des revendications 1 à 9.

**11.** Procédé de fabrication d'une composition de résine, le procédé comprenant l'étape d'obtention de la composition de résine selon l'une quelconque des revendications 1 à 9 en mélangeant au moins le copolymère à base d'acide carboxylique insaturé d'éthylène (A), le polymère d'oléfine (B) et une source d'ions métalliques pour générer la résine ionomère du copolymère (A) à base d'acide carboxylique insaturé d'éthylène par neutralisation du copolymère à base d'acide carboxylique insaturé d'éthylène (A) avec l'ion métallique au cours du mélange.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S60127149 A
- JP 2011042809 A
- FR 1567487 A
- BE 663684 A